# EUROPEAN PATENT SPECIFICATION

(11) **EP 4 255 691 B1**
(45) Date of publication and mention of the grant of the patent: **04.02.2026**
(21) Application number: 21835053.6
(22) Date of filing: 01.12.2021
(51) Int. Cl.: B25J 9/16

(54) **PIXELWISE PREDICTIONS FOR GRASP GENERATION**
PIXELWEISE VORHERSAGEN ZUR GREIFERZEUGUNG
PRÉDICTIONS PAR PIXEL PERMETTANT LA GÉNÉRATION D'UNE SAISIE

(30) Priority: 02.12.2020 US 202063120624 P
(43) Date of publication of application: 11.10.2023
(73) Proprietor: Ocado Innovation Limited, Hatfield, Hertfordshire AL10 9UL (GB)
(72) Inventor: RUDY, Jan Stanislaw, Toronto, Ontario M5V 2Y1 (CA); BERGSTRA, James Sterling, Toronto, Ontario M5V 2Y1 (CA)
(74) Representative: Ocado Group IP Department
(86) International application number: PCT/US2021/061462
(87) International publication number: WO 2022/119962

(56) References cited:
- CHU FU-JEN ET AL: "Toward Affordance Detection and Ranking on Novel Objects for Real-World Robotic Manipulation", IEEE ROBOTICS AND AUTOMATION LETTERS, IEEE, vol. 4, no. 4, 1 October 2019 (2019-10-01), pages 4070 - 4077, XP011739397, DOI: 10.1109/LRA.2019.2930364
- ZENG ANDY ET AL: "Learning Synergies Between Pushing and Grasping with Self-Supervised Deep Reinforcement Learning", 2018 IEEE/RSJ INTERNATIONAL CONFERENCE ON INTELLIGENT ROBOTS AND SYSTEMS (IROS), IEEE, 1 October 2018 (2018-10-01), pages 4238 - 4245, XP033491226, DOI: 10.1109/IROS.2018.8593986
- HASEGAWA SHUN ET AL: "GraspFusion: Realizing Complex Motion by Learning and Fusing Grasp Modalities with Instance Segmentation", 2019 INTERNATIONAL CONFERENCE ON ROBOTICS AND AUTOMATION (ICRA), IEEE, 20 May 2019 (2019-05-20), pages 7235 - 7241, XP033593721, DOI: 10.1109/ICRA.2019.8793710
- DENG YUHONG ET AL: "Deep Reinforcement Learning for Robotic Pushing and Picking in Cluttered Environment", 2019 IEEE/RSJ INTERNATIONAL CONFERENCE ON INTELLIGENT ROBOTS AND SYSTEMS (IROS), IEEE, 3 November 2019 (2019-11-03), pages 619 - 626, XP033695471, DOI: 10.1109/IROS40897.2019.8967899

## Description

### Technical Field

The present disclosure relates to robotic control systems, more specifically to systems and methods for use in grasp generation.

### Background

Robotic automation is a field that can improve productivity, safety, and economy when performing tasks. For robots that manipulate objects, generating grasp poses is often an important component of the task. For example, a robot may observe an object and determine where to position a gripper (according to a position and orientation, e.g. a "pose") so that the robot is able to pick up the object. The stability of an individual grasp may depend on the object and gripper geometry, object mass distribution, and surface friction, among other factors. The geometry around an object may impose additional constraints by limiting the grasp points that are reachable without causing the robot manipulator to collide with other objects in a scene. In some cases, this problem is approached by geometry-inspired heuristics to select promising grasp points around an object, possibly followed by a more in-depth geometric analysis of the stability and reachability of a sampled grasp. However, many of these approaches rely on the availability of complete 3D models of an object to be grasped, which can be a severe limitation in realistic picking scenarios. Therefore, improved methods of grasp determination are needed.

CHU FU-JEN et al: "Toward Affordance Detection and Ranking on Novel Objects for Real-World Robotic Manipulation", IEEE ROBOTICS AND AUTOMATION LETTERS, IEEE, vol. 4, no. 4, 2019-10-01, pages 4070-4077, describes a framework to detect and rank affordances of novel objects to assist with robotic manipulation tasks.

ZENG ANDY ET AL: "Learning Synergies Between Pushing and Grasping with Self-Supervised Deep Reinforcement Learning", 2018 IEEE/RSJ INTERNATIONAL CONFERENCE ON INTELLIGENT ROBOTS AND SYSTEMS (IROS), IEEE, 2018-10-01, pages 4238-4245, describes a method involving training two fully convolutional networks that map from visual observations to actions: one infers the utility of pushes for a dense pixel-wise sampling of end effector orientations and locations, while the other does the same for grasping.

HASEGAWA SHUN ET AL: "GraspFusion: Realizing Complex Motion by Learning and Fusing Grasp Modalities with Instance Segmentation", 2019 INTERNATIONAL CONFERENCE ON ROBOTICS AND AUTOMATION (ICRA), IEEE, 2019-05-20, pages 7235-7241 describes a system that consists of: 1) object-class-agnostic grasp modality detection; 2) object-class-agnostic instance segmentation; and 3) grasp template matching for different modalities.

DENG YUHONG ET AL: "Deep Reinforcement Learning for Robotic Pushing and Picking in Cluttered Environment", 2019 IEEE/RSJ INTERNATIONAL CONFERENCE ON INTELLIGENT ROBOTS AND SYSTEMS (IROS), IEEE, 2019-11-03, pages 619-626, describes a robotic grasping system in which an effective metric is designed to calculate the reward for the current affordance map, and a deep Q-Network (DQN) is employed to guide the robotic hand to actively explore the environment until the generated affordance map is suitable for grasping.

### Summary

There is provided a data processing apparatus for grasp generation according to claim 1 and a computer-implemented method according to claim 10.

Also provided is a computer system comprising one or more processors and computer-readable memory storing executable instructions that, as a result of being executed by the one or more processors, cause the computer system to perform the aforementioned method. Similarly, a machine-readable medium is provided, having stored thereon a set of instructions which, if performed by one or more processors, cause the one or more processors to perform the aforementioned method.

In general terms, this description introduces systems and methods to use a grasping model comprising a neural network to obtain pixelwise predictions (e.g. scoremaps or heatmaps) for corresponding grasp outcomes in a set of grasp outcomes. The pixelwise predictions are output as a single aggregated pixelwise prediction for use in grasp generation, e.g. by sampling the pixelwise prediction to obtain two-dimensional grasp locations from which grasp poses (e.g. with six degrees of freedom) in the taskspace of a robot can be generated. By providing the set of grasp predictions as a single aggregated pixelwise prediction, other pixelwise data such as heuristic data and/or segmentation data relating to the scene can be incorporated into the scoring of pixels as candidate grasp locations. Furthermore, reinforcement learning techniques are applied to tune weights in at least one of two levels, e.g. in the aggregation of the pixelwise predictions into a single aggregated pixelwise prediction, and/or in the aggregation of the single aggregated pixelwise prediction with additional pixelwise data. The grasping model described herein can thus be implemented in a grasping pipeline for a robot and tuned to improve performance metrics of the robot at the macro-level, e.g. the speed or throughput of the robot.

### Brief Description of the Drawings

Embodiments will now be described by way of example only with reference to the accompanying drawings, in which like reference numbers designate the same or corresponding parts, and in which:
Figure 1 is a schematic representation of a robotic picking system according to examples;
Figures 2 and 3A are schematic representations of input and output data for a grasping model according to examples;
Figure 3B is a schematic representation of an aggregation of a plurality of pixelwise predictions according to an example;
Figure 4 is a schematic representation of a neural network, employed as part of the grasping model, according to an example; and
Figure 5 is a process flowchart.

In the drawings, like features are denoted by like reference signs where appropriate.

### Detailed Description

In the following description, some specific details are included to provide a thorough understanding of various disclosed embodiments. One skilled in the relevant art, however, will recognise that embodiments may be practiced without one or more of these specific details, or with other methods, components, materials, etc. In some instances, well-known structures associated with gripper assemblies and/or robotic manipulators, such as processors, sensors, storage devices, network interfaces, workpieces, tensile members, fasteners, electrical connectors, mixers, and the like are not shown or described in detail to avoid unnecessarily obscuring descriptions of the disclosed embodiments.

Unless the context requires otherwise, throughout the specification and the appended claims, the word "comprise" and variations thereof, such as, "comprises" and "comprising" are to be construed in an open, inclusive sense, that is as "including, but not limited to."

Reference throughout this specification to "one", "an", or "another" applied to "embodiment" or "example", means that a particular referent feature, structure, or characteristic described in connection with the embodiment, example, or implementation is included in at least one embodiment, example, or implementation. Thus, the appearances of the phrase "in one embodiment" or the like in various places throughout this specification are not necessarily all referring to the same embodiment. Furthermore, the particular features, structures, or characteristics may be combined in any suitable manner in one or more embodiments, examples, or implementations.

It should be noted that, as used in this specification and the appended claims, the users forms "a", "an", and "the" include plural referents unless the content clearly dictates otherwise. Thus, for example, reference to a gripper assembly including "a finger element" includes a finger element or two or more finger elements. It should also be noted that the term "or" is generally employed in its sense including "and/or" unless the content clearly dictates otherwise.

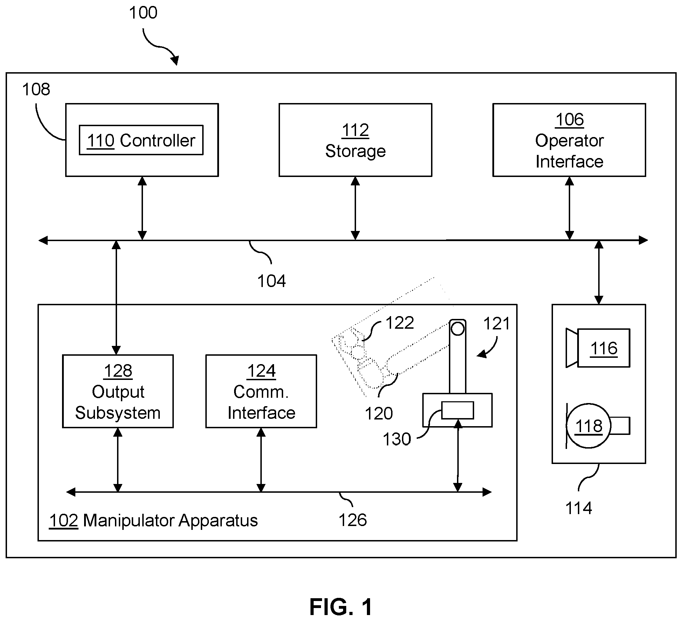

With reference to Figure 1, there is illustrated an example of a robotic picking system 100 such that may be adapted for use with the present assemblies, devices, and methods. The robotic picking system 100 may form part of an online retail operation, such as an online grocery retail operation, but may also be applied to any other operation requiring the picking and/or sorting of items.

In this example, the robotic picking system 100 includes a manipulator apparatus 102 comprising a robotic manipulator 121. The robotic manipulator 121 is configured to pick an item from a first location and place the item in a second location, for example.

The manipulator apparatus 102 is communicatively coupled via a communication interface 104 to other components of the robotic picking system 100, such as to one or more optional operator interfaces 106, from which an observer may observe or monitor the operation of the system 100 and the manipulator apparatus 102. The operator interfaces 106 may include a WIMP interface and an output display of explanatory text or a dynamic representation of the manipulator apparatus 102 in a context or scenario. For example, the dynamic representation of the manipulator apparatus 102 may include video and audio feed, for instance a computer-generated animation. Examples of suitable communication interface 104 include a wire based network or communication interface, optical based network or communication interface, wireless network or communication interface, or a combination of wired, optical, and/or wireless networks or communication interfaces.

The robotic picking system 100 further comprises a control system 108 including at least one controller 110 communicatively coupled to the manipulator apparatus 102 and any other components of the robotic picking system 100 via the communication interface 104. The controller 110 comprises a control unit or computational device having one or more electronic processors. Embedded within the one or more processors is computer software comprising a set of control instructions provided as processor-executable data that, when executed, cause the controller 110 to issue actuation commands or control signals to the manipulator system 102. For example, the actuation commands or control signals cause the manipulator 121 to carry out various methods and actions, such as identifying and manipulating items.

The one or more electronic processors may include at least one logic processing unit, such as one or more microprocessors, central processing units (CPUs), digital signal processors (DSPs), graphics processing units (GPUs), application-specific integrated circuits (ASICs), programmable gate arrays (PGAs), programmed logic units (PLUs), or the like. In some implementations, the controller 110 is a smaller processor-based device like a mobile phone, single board computer, embedded computer, or the like, which may be termed or referred to interchangeably as a computer, server, or an analyser. The set of control instructions may also be provided as processor-executable data associated with the operation of the system 100 and manipulator apparatus 102 included in a non-transitory computer-readable storage device 112, which forms part of the robotic picking system 100 and is accessible to the controller 110 via the communication interface 104.

In some implementations, the storage device 112 includes two or more distinct devices. The storage device 112 can, for example, include one or more volatile storage devices, for instance random access memory (RAM), and one or more non-volatile storage devices, for instance read only memory (ROM), flash memory, magnetic hard disk (HDD), optical disk, solid state disk (SSD), or the like. A person of skill in the art will appreciate storage may be implemented in a variety of ways such as a read only memory (ROM), random access memory (RAM), hard disk drive (HDD), network drive, flash memory, digital versatile disk (DVD), any other forms of computer- and processor-readable memory or storage medium, and/or a combination thereof. Storage can be read only or read-write as needed.

The robotic picking system 100 includes a sensor subsystem 114 comprising one or more sensors that detect, sense, or measure conditions or states of manipulator apparatus 102 and/or conditions in the environment or workspace in which the manipulator 121 operates, and produce or provide corresponding sensor data or information. Sensor information includes environmental sensor information, representative of environmental conditions within the workspace of the manipulator 121, as well as information representative of condition or state of the manipulator apparatus 102, including the various subsystems and components thereof, and characteristics of the item to be manipulated. The acquired data may be transmitted via the communication interface 104 to the controller 110 for directing the manipulator 121 accordingly. Such information can, for example, include diagnostic sensor information that is useful in diagnosing a condition or state of the manipulator apparatus 102 or the environment in which the manipulator 121 operates.

Such sensors, for example, include one or more cameras or imagers 116 (e.g. responsive in visible and/or nonvisible ranges of the electromagnetic spectrum including, for instance, infrared and ultraviolet). Other sensors of the sensor subsystem 114 may include one or more of contact sensors, force sensors, strain gages, vibration sensors, position sensors, attitude sensors, accelerometers, radars, sonars, lidars, touch sensors, pressure sensors, load cells, microphones 118, meteorological sensors, chemical sensors, or the like. In some implementations, the sensors include diagnostic sensors to monitor a condition and/or health of an on-board power source within the manipulator apparatus 102 (e.g., battery array, ultra-capacitor array, fuel cell array).

In some implementations, the one or more sensors comprise receivers to receive position and/or orientation information concerning the manipulator 121. For example, a global position system (GPS) receiver to receive GPS data, two more time signals for the controller 110 to create a position measurement based on data in the signals, such as time of flight, signal strength, or other data to effect a position measurement. Also, for example, one or more accelerometers, which may also form part of the manipulator apparatus 102, could be provided on the manipulator 121 to acquire inertial or directional data, in one, two, or three axes, regarding the movement thereof.

The robotic manipulator 121 of the system 100 may be piloted by a human operator at the operator interface 106. In human operator controlled or piloted mode, the human operator observes representations of sensor data, for example, video, audio, or haptic data received from the one or more sensors of the sensor subsystem 114. The human operator then acts, conditioned by a perception of the representation of the data, and creates information or executable control instructions to direct the manipulator 121 accordingly. In piloted mode, the manipulator apparatus 102 may execute control instructions in real-time (e.g., without added delay) as received from the operator interface 106 without taking into account other control instructions based on sensed information.

In some implementations, the manipulator apparatus 102 operates autonomously. That is, without a human operator creating control instructions at the operator interface 106 for directing the manipulator 121. The manipulator apparatus 102 may operate in an autonomous control mode by executing autonomous control instructions. For example, the controller 110 can use sensor data from one or more sensors of the sensor subsystem 114, the sensor data being associated with operator generated control instructions from one or more times the manipulator apparatus 102 was in piloted mode to generate autonomous control instructions for subsequent use. For example, by using deep learning techniques to extract features from the sensor data such that in autonomous mode the manipulator apparatus 102 autonomously recognize features or conditions in its environment and the item to be manipulated, and in response perform a defined act, set of acts, a task, or a pipeline or sequence of tasks. In some implementations, the controller 110 autonomously recognises features and/or conditions in the environment surrounding the manipulator 121, as represented by a sensor data from the sensor subsystem 114 and one or more virtual items composited into the environment, and in response to being presented with the representation, issue control signals to the manipulator apparatus 102 to perform one or more actions or tasks.

In some instances, the manipulator apparatus 102 may be controlled autonomously at one time, while being piloted, operated, or controlled by a human operator at another time. That is, operate under an autonomous control mode and change to operate under a piloted mode (i.e., non-autonomous). In another mode of operation, the manipulator apparatus 102 can replay or execute control instructions previously carried out in a human operator controlled (or piloted) mode. That is, the manipulator apparatus 102 can operate without sensor data based on replayed pilot data.

The manipulator apparatus 102 further includes a communication interface subsystem 124 (e.g., a network interface device) that is communicatively coupled to a bus 126 and provides bi-directional communication with other components of the system 100 (e.g., the controller 110) via the communication interface 104. The communication interface subsystem 124 may be any circuitry affecting bidirectional communication of processor-readable data, and processor-executable instructions, for instance radios (e.g., radio or microwave frequency transmitters, receivers, transceivers), communications ports and/or associated controllers. Suitable communication protocols include FTP, HTTP, Web Services, SOAP with XML, WI-FI^{™} compliant, BLUETOOTH^{™} compliant, cellular (e.g., GSM, CDMA), and the like.

The manipulator 121 is an electro-mechanical machine comprising one or more appendages, such as a robotic arm 120, and a gripper assembly or end effector 122 mounted on an end of the robotic arm 120. The end effector 122 is a device of complex design configured to interact with the environment in order to perform a number of tasks, including, for example, gripping, grasping, releasably engaging or otherwise interacting with an item. Examples of the end effector 122 include a jaw gripper, a finger gripper, a magnetic or electromagnetic gripper, a Bernoulli gripper, a vacuum suction cup, an electrostatic gripper, a van der Waals gripper, a capillary gripper, a cryogenic gripper, an ultrasonic gripper, and a laser gripper.

The manipulator apparatus 102 further includes a motion subsystem 130, communicatively coupled to the robotic arm 120 and end effector 122. The motion subsystem 130 comprises one or more motors, solenoids, other actuators, linkages, drive-belts, or the like operable to cause the robotic arm 120 and/or end effector 122 to move within a range of motions in accordance with the actuation commands or control signals issued by the controller 110. The motion subsystem 130 is communicatively coupled to the controller 110 via the bus 126.

The manipulator apparatus 102 also includes an output subsystem 128 comprising one or more output devices, such as speakers, lights, or displays that enable the manipulator apparatus 102 to send signals into the workspace in order to communicate with, for example, an operator and/or another manipulator apparatus 102.

A person of ordinary skill in the art will appreciate the components in manipulator apparatus 102 may be varied, combined, split, omitted, or the like. In some examples one or more of the communication interface subsystem 124, the output subsystem 128, and/or the motion subsystem 130 may be combined. In other examples, one or more of the subsystems (e.g., the motion subsystem 130) are split into further subsystems.

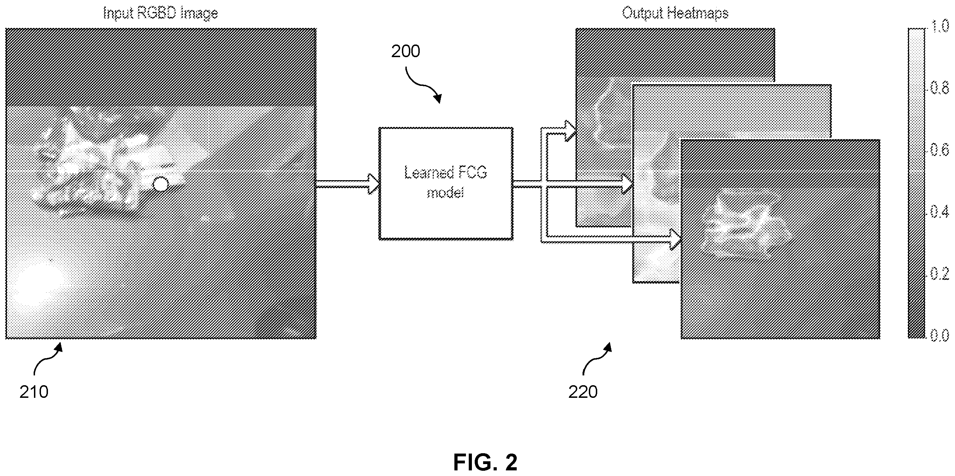

Figure 2 shows a schematic input and output pipeline of a grasping model 200. The grasping model 200 may be implemented as part of a grasping operation carried out by the robotic picking system 100 of previous examples. For example, the control system 108 comprises a grasp control system, e.g. the controller 110 described with reference to Figure 1, which is configured to issue actuation commands or control signals to the manipulator system 102. The grasp control system includes one or more processors which are communicatively coupled to the grasping model 200, for example.

The grasping model 200 includes a neural network trained to predict a plurality of outcomes associated with the grasping operation based on images of graspable objects. Image data, including depth data, e.g. as RGB-D data, is input to the grasping model 200 which processes the image data to generate independent predictions for the plurality of outcomes. In other words, the same grasping model 200 (comprising the trained neural network) is configured to generate a plurality of independent predictions for a set of corresponding outcomes associated with the grasping operation. In examples, the grasping model 200 comprises a learned fully-convolutional network (FCN). In such cases the grasping model 200 may be referred to as a fully convolutional grasping (FCG) model.

Figure 2 shows an example RGB-D image 210, comprising three colour (red, green, blue) channels and a depth channel, as input to the grasping model 200. The image 210 shows multiple objects in a workspace of a picking robot. The grasping model 200 is configured to process the (RGB-D) image data to generate a plurality of pixelwise predictions corresponding to the plurality of outcomes. The pixelwise predictions are representable as pixelwise prediction maps (or "heatmaps") 220. Each of the heatmaps 220 is a visualisation of the generated pixelwise probability values corresponding to a respective outcome associated with the grasping operation.

The set of outcomes associated with the grasping operation may include two or more of a successful grasp of the object, a successful scan of the object, a successful placement of the object, a successful subsequent grasp of another object, an avoidance of grasping another object with the object, and an avoidance of stopping the grasping operation. For example, a successful grasp of an object corresponds to the robotic manipulator completing a grasp operation or grasp duty cycle on the object (e.g. including picking up the object at a first location, moving the object to a second location, and placing the object at the second location) without dropping the item. Detecting that the object has fallen from the manipulator, e.g. the end effector thereof, before placement of the object constitutes dropping the item, for example. The manipulator, or end effector thereof, may include at least one contact sensor configured to detect contact with a picked item. Thus, detection of the item as being dropped may be determined based on feedback from the at least one contact sensor. A successful placement of the object corresponds to a placement of the object at a location within a predetermined threshold distance, or a measure of how centred the placement of the object is within a target placement area, for example. A successful scan of an object corresponds to a registered or completed scan of an identifying marker (e.g. a barcode) on the object during the grasp operation or duty cycle, for example. An avoidance of grasping another object simultaneously, e.g. a "double pick", corresponds to a determination that a detection of a double pick has not occurred during the grasp operation or duty cycle, for example. An avoidance of stopping the grasping operation may correspond to a determination that a stop of the grasping operation or duty cycle has not occurred during the grasping operation or duty cycle. For example, a protective stop or "p-stop" may be triggered by a robot controller during a grasping operation to protect the robot, e.g. from damage. In other cases, the grasping operation may be stopped due to failure of the robot to complete the grasping operation, e.g. within a predetermined time threshold.

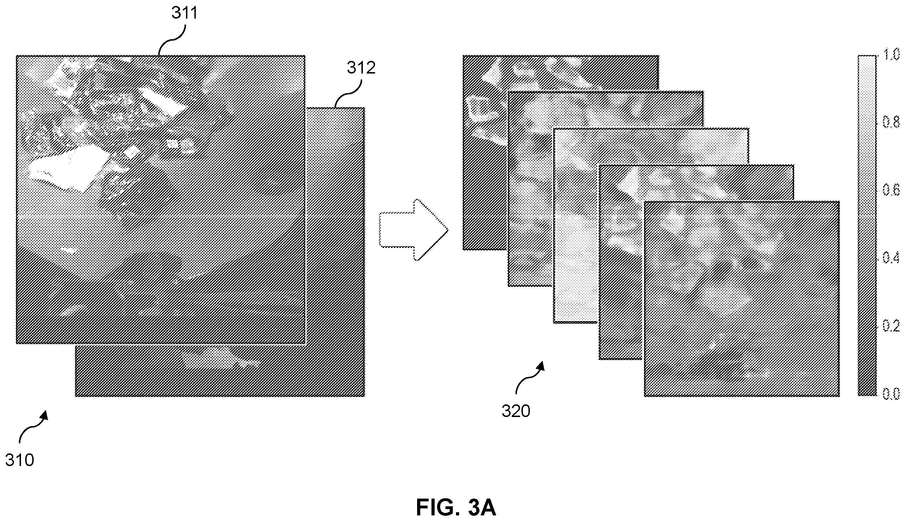

Figure 3A shows another example of the inputs and outputs of the grasping model 200 for grasp generation as part of a grasping operation. Image data 310, including colour data 311 and depth data 312, is input to the grasping model 200 comprising the trained neural network, which generates a plurality of independent pixelwise predictions 320 for the grasping operation. There are five pixelwise predictions generated in the example of Figure 3A, which shows the five output pixelwise heatmaps 320 corresponding to five different outcomes associated with the grasping operation.

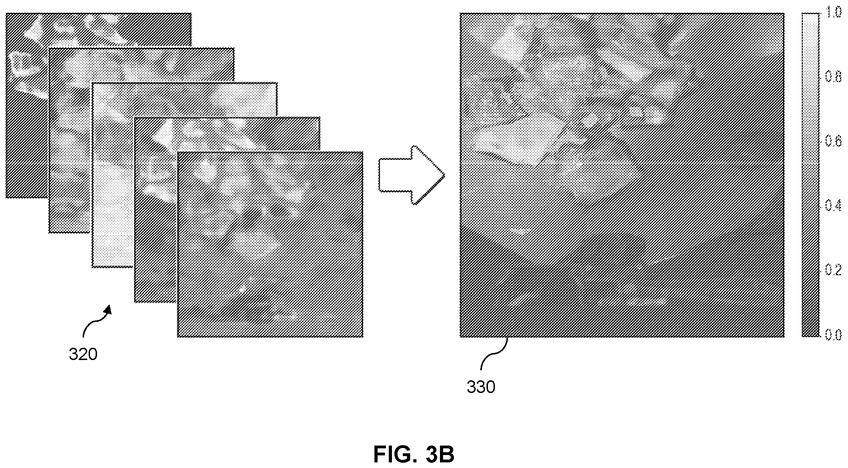

Figure 3B shows an example of an aggregation of the multiple pixelwise heatmaps into an aggregated pixelwise heatmap, wherein the five heatmaps 320 generated in the example of Figure 3A are aggregated into a single pixelwise prediction 330. In examples, a weighted sum is used for the aggregation, though other pixelwise aggregation methods are possible, e.g. weighted product. Where a weighted pixelwise aggregation is used, the weights corresponding to the respective pixelwise predictions, e.g. heatmaps, can be predetermined or tuned via reinforcement learning methods (described later).

The aggregated pixelwise heatmap 330 can be used to select therefrom grasp locations on which to base generation of grasp poses to grasp the object. For example, the aggregated pixelwise heatmap 330 can be sampled deterministically (e.g. via a greedy algorithm) or probabilistically (e.g. per a probability distribution such as one derived from the aggregated pixelwise heatmap 330) to obtain the pixels corresponding to candidate grasp locations.

### Neural Network

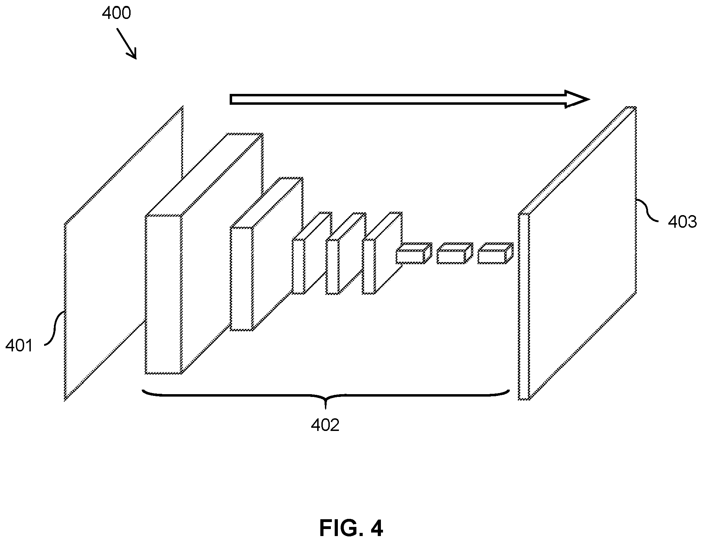

Figure 4 shows an example of a neural network architecture for implementing as part of the grasping model 200. The example neural network 400 is a fully convolutional neural network (FCN). An example of an FCN is the U-Net architecture developed by the Computer Science Department of the University of Freiburg, although other FCNs and convolutional neural networks (CNNs) are usable e.g. the VGG-16 network architecture. An input 401 to the FCN 400 comprises image data, including depth data, in this example. The input image data 401 is a given number of pixels wide and a given number of pixels high and includes one or more colour channels (e.g. red, green and blue colour channels) and a depth channel. Convolutional layers 402 of the FCN 400 typically extract particular features from the input data 401, to create feature maps, and may operate on small portions of an image.

In the example of Figure 4, the output of at least one of the convolutional layers 402 undergoes pooling, e.g. at a pooling layer, before being input to the next convolutional layer in the sequence of convolutional layers 402. Pooling, for example, allows values for a region of an image or a feature map to be aggregated or combined, e.g. by taking the highest value within a region. For example, with 2×2 max pooling, the highest value of the output of a given convolutional layer within a 2×2 pixel patch of the feature map output from the given convolutional layer is used as the input to the subsequent convolutional layer in the set of layers 402, rather than transferring the entire output. Thus, pooling can reduce the amount of computation for subsequent layers of the neural network 400. The effect of pooling is shown schematically in Figure 4 as a reduction in size of the frames in the relevant layers. It is to be appreciated that the schematic representation of the neural network 400 in Figure 4 has been greatly simplified for ease of illustration; typical neural networks may be significantly more complex. For example, the neural network 400 includes one or more upsampling (e.g. up-convolution) layers and/or one or more skip (or "shortcut") connections. In general, the neural network architectures used for the grasping model 200 do not make use of fully connected layers. For example, the U-Net architecture uses only convolution, pooling, and upsampling layers along with skip connections. If a pre-trained architecture (e.g. VGG-16) is used, only the convolutional "backbone" (e.g. the set of feature extraction layers) is used with appropriate modifications (e.g. additional layers) to ensure that the output prediction maps (e.g. heatmaps) have the same dimension as the input image.

In general, neural networks such as the FCN 400 of Figure 4 may undergo what is referred to as a "training phase", in which the neural network is trained for a particular purpose. A neural network typically includes layers of interconnected artificial neurons forming a directed, weighted graph in which vertices (corresponding to neurons) or edges (corresponding to connections) of the graph are associated with weights, respectively. The weights may be adjusted throughout training, altering the output of individual neurons and hence of the neural network as a whole. In contrast to using a CNN for object classification, the FCN of the grasping model is configured to make a pixelwise prediction of certain outcomes.

In the present context, the neural network 400 is trained to predict grasping outcomes by processing image data, e.g. to determine pixelwise probability values corresponding to respective grasping outcomes. Training the neural network 400 in this way for example generates weight data representative of weights to be applied to input image data (e.g. with different weights being associated with different respective layers of a multi-layer neural network architecture). Each of these weights is multiplied by a corresponding pixel value of an image patch, for example, to convolve a kernel of weights with the image patch.

Specific to the context of grasping prediction, the neural network 400 is trained with a training dataset comprising a number of grasps performed with a robot. Each "grasp" in the dataset comprises: a captured image, including depth data, of the robot's task space (e.g. bin) before the grasp; a grasp pose in world coordinates; a mapping from world coordinates to pixel coordinates of the image; and the resulting measured outcomes (e.g. grasp success, barcode scan success, etc.). Given an input image, the FCG model produces an output prediction, e.g. a heatmap, of the same dimension as the input image with one channel for each predicted outcome. For example, a given pixel (corresponding to a grasp location) in the output heatmap is associated with a vector that represents the grasping model's predicted probability of each outcome if a grasp were to be performed in the immediate vicinity of that pixel. Each component of the vector comprises the predicted probability for a corresponding outcome, for example. The training procedure increases, e.g. maximizes, the likelihood of the outcomes at the pixel corresponding to the grasp location as seen in the training dataset. Once trained, the neural network 400 can be used to predict pixelwise probability values corresponding to any of the grasping outcomes for which the network 400 has been trained.

In examples, the one or more processors of the grasp control system that are communicatively coupled to the grasping model 200 are configured to obtain and provide the image data to the grasping model 200 and receive the generated pixelwise predictions. The one or more processors aggregate the pixelwise predictions and output the aggregated pixelwise prediction for selection therefrom of grasp locations from which to generate one or more grasp poses to grasp the object. In some implementations, the one or more processors of the control system 108 implement the grasping model 200 locally.

### Heuristics

In some implementations, the grasp control system is configured to obtain the aggregated pixelwise prediction map 330 and combine it with one or more pixelwise heuristic maps. Pixelwise heuristic data is representative of pixelwise heuristic values corresponding to a given heuristic, for example. Such heuristic data may include height data, surface data (e.g. surface normal data), image segmentation data, or any other heuristic data separate to the grasp data for which the grasping model 200 is trained to predict. Thus, the grasping model 200 being configured to generate pixelwise grasp prediction data allows for other pixelwise data, e.g. pixel maps, to be combined therewith. The grasp control system combines the aggregated pixelwise prediction (e.g. aggregated heatmap) with the one or more pixelwise heuristics (e.g. heuristic heatmaps) to obtain a combined pixelwise map.

### Grasp Generation

In some implementations, the controller 110 of the robotic system 100 works with a pose generator (or pose estimator) configured to generate (e.g. determine or estimate) grasp poses. Pose information includes processor-readable information that represents a location, an orientation, or both. Each grasp pose comprises a six-dimensional (6D) pose of the robotic manipulator 121 for grasping the object, the six dimensions including three translational dimensions and a rotational orientation of the object.

One or more grasp locations can be input to the pose generator to generate one or more grasp poses based on the one or more grasp locations. The one or more grasp locations correspond to one or more pixels selected from the aggregated pixelwise prediction or combined pixelwise map (where one or more pixelwise heuristics are combined with the aggregated pixelwise prediction). For example, the one or more pixels are sampled from the relevant pixelwise map, e.g. deterministically or probabilistically, as described in earlier examples. Determining a grasp pose, e.g. having six degrees of freedom, based on a pixel location in an image, can be done heuristically (e.g. using a top-down approach, surface normals, etc.) or using a trained neural network configured for pose estimation. For example, determining the grasp pose involves mapping two-dimensional pixel locations in the image to a six-dimensional pose.

The controller 110 obtains the one or more generated grasp poses from the pose generator and controls the robotic manipulator based thereon, for example. In examples, the one or more grasp poses are ranked according to their corresponding pixel values, e.g. the pixelwise probability values in the aggregated pixelwise prediction or a combined "score" in the combined pixelwise map incorporating heuristic data. The controller 110 may thus issue actuation commands or control signals to cause the manipulator 121 to grasp the object according to the one or more grasp poses in ranked order.

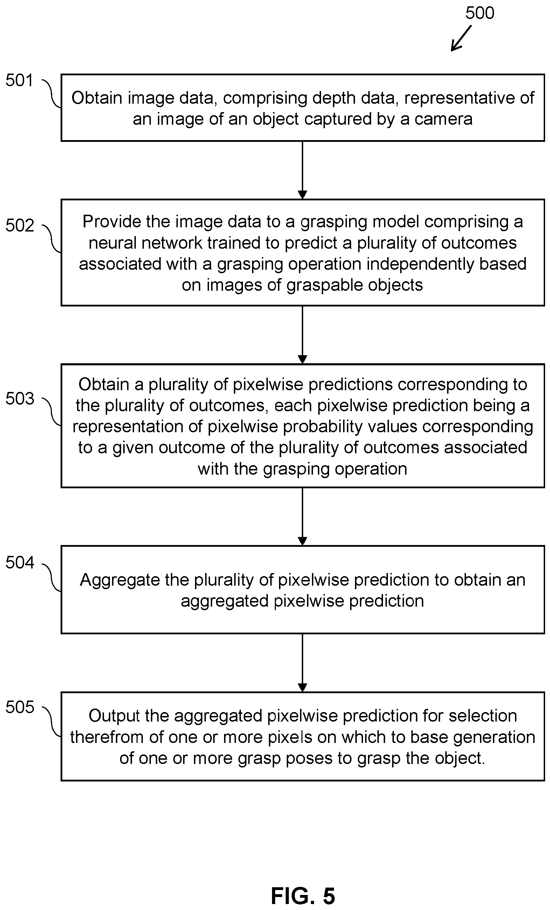

Figure 5 shows a flowchart depicting a corresponding computer-implemented process for grasp generation. For example, the process may be encoded in instructions executable by one or more processors, such as those of the grasp control system communicatively coupled to the grasping model 200 in previous examples. The executable instructions are stored in computer-readable memory, e.g. storage 112, or on a machine-readable medium such as an electrical, magnetic or optical storage medium.

The process 500 begins with obtaining 501 image data, comprising depth data, representative of an image of an object captured by a camera. One or more camera parameters are also obtained (e.g. intrinsic parameters such as the focal length, and/or extrinsic parameters such as the pose of the camera in world coordinates) for use in mapping pixel coordinates (e.g. in 2D) in the image to world coordinates (e.g. in 3D). The image data is provided 502 to a grasping model comprising a neural network trained to predict a plurality of outcomes associated with a grasping operation independently based on images of graspable objects. A plurality of pixelwise predictions corresponding to the plurality of outcomes are then obtained 503. Each pixelwise prediction, e.g. visualisable as a heat map, is a representation of pixelwise probability values corresponding to a given outcome of the plurality of outcomes associated with the grasping operation. The example outcomes associated with the grasping operation described in the earlier system implementations apply here too.

The plurality of pixelwise predictions are then aggregated 504 to obtain an aggregated pixelwise prediction, e.g. heatmap. The process 500 ends with outputting 505 the aggregated pixelwise prediction for selection therefrom of one or more pixels on which to base generation of one or more grasp poses to grasp the object. Thus, the process 500 can be applied, e.g. as part of a grasp generation pipeline, to any robotic system in which an item is to be grasped and used for some other task (or tasks): the outcome of these downstream tasks can be measured and quantified such that the resulting data can be used as training data for the grasping model. In other words, grasping an item is not the objective in and of itself: in practice, an object is often picked up to do something else with it (e.g. picking up a spoon to stir coffee).

In some implementations, the process 500 involves processing the image data, using the grasping model comprising the neural network, to predict the plurality of outcomes independently. The plurality of pixelwise predictions corresponding to the plurality of outcomes are generated, for example, by the grasping model as part of the process 500.

In examples, the process 500 involves selecting, e.g. sampling, the one or more pixels from the aggregated pixelwise prediction based on one or more corresponding probability values in the pixelwise prediction. The one or more grasp locations, e.g. corresponding to the one or more selected pixels, are outputted for a robot to grasp the object based thereon. For example, one or more grasp poses are generated based on the one or more one or more grasp locations. The one or more grasp poses may be output to the robot for implementing the one or more grasp poses to grasp the object.

In other examples, the process 500 involves obtaining one or more pixelwise heuristic maps, each representative of pixelwise heuristic values corresponding to a given heuristic, in addition to the aggregated pixelwise prediction. The one or more pixelwise heuristic maps are combined with the aggregated pixelwise prediction to obtain a combined pixelwise map, for example. In such cases, the grasp pose generation or estimation involves obtaining one or more grasp locations by sampling one or more corresponding pixels from the combined pixelwise map. The one or more grasp poses can then be generated or estimated based on the one or more grasp locations and output to the robot for implementation.

The neural network of the grasping model is trained, for example, based on at least one of historical grasp data or simulated grasp data, e.g. instead of hand-annotated grasp data. For example, the historical grasp data is collected during implementation of the grasping robot, e.g. in production settings, using a given grasping policy, e.g. in a supervised fashion. Additionally, or alternatively, grasps of the robot may be simulated, e.g. where the controller of the robotic manipulator issues real control signals or actuation commands for grasping but these are implemented by a simulated manipulator operating in a simulated environment.

The grasping model, e.g. the neural network, may be updated based on further grasp data obtained from grasping further objects as part of the process 500. For example, where the grasping model is implemented in a live environment, e.g in an industrial or production setting, the instructions and results of live grasps can be collected and added to a training set for updating the grasping model. For example, the neural network can be retrained, e.g. iteratively, using the new grasp data collected during implementation of the robot.

According to the invention, a reinforcement learning (RL) model is applied using the plurality of pixelwise predictions, corresponding to the plurality of outcomes, as feature inputs to the RL model. Furthermore, where a weighted aggregation is used for the pixelwise aggregation of the plurality of pixelwise predictions, the one or more weights corresponding to respective pixelwise predictions (e.g. heatmaps) in the set of pixelwise predictions are adjusted as part of the RL process.

In this way, the grasping model can be interpreted as a "Q-function" for a Q-learning RL approach, or as a "Critic" network in an Actor-Critic RL framework, which associates each action (e.g. a grasp executed at a given pixel location + 6d pose) with a score or set of scores. Framed in this way, RL approaches can be applied to both the training and the data collection steps. For example, this can inform the grasp selection strategy in order to properly balance exploration (e.g. picking at locations where the model is unsure of the outcome in order to build a better understanding of the task space) and exploitation (e.g. picking at locations where the model is more certain it will succeed).

In some implementations, the process 500 handles one or more grasp parameters which are not directly inferrable from pixel coordinates. Examples of such grasp parameters include grasp height, end effector orientation, end effector selection, and grasping strategy. These additional grasp parameters can be handled in different ways. For example, an additional input corresponding to each value of the parameter (e.g. each end effector selection) can be passed to the grasping model to generate pixelwise predictions that are conditional on the value of the additional parameter. Alternatively, the grasping model can be configured to generate a separate pixelwise prediction (e.g. heatmap) for each value of the parameter. As an example, for two grasping outcomes (e.g. grasp success and placement success) and three additional parameter values (e.g. three possible vacuum cup types), the grasping model is configured to generate six output pixelwise predictions (heatmaps): one for each combination of grasp outcome and additional parameter value (e.g. vacuum cup type). As a further alternative, the grasping model can be configured to generate a separate output (e.g. the model comprises an additional output head) to predict the parameter value (e.g. end effector selection) at each pixel. The separate outputs are included, for example, as channels in the pixelwise predictions (e.g. heatmaps). In the example case of three additional parameter values (e.g. corresponding to three possible vacuum cup types), the output pixelwise prediction for each grasping outcome would comprise a three-channel image with each channel corresponding to a single parameter value (e.g. vacuum cup type).

Returning to the context of implementing the described grasping model as part of a grasping pipeline, the robot control system 108 (e.g. controller 110) of a robot may initiate the process for generating grasp candidates. For example, the robot control system 108 sends a request for grasp candidates to a grasp control system. The grasp control system obtains the image data, including depth data, corresponding to a present state of the workspace (e.g. a picking bin or container). The image data is processed with one or more prediction (or "scoring") models, including the grasping model (e.g. FCG model) described herein. Other scoring models include heuristics models and segmentation models (e.g. for recognising where different objects are in the image) described previously, for example. Where additional scoring models are used in addition to the grasping model, the output score maps are combined into a single output score map. The output score map is sampled to obtain pixels corresponding to two-dimensional grasp candidates. The two-dimensional grasp candidates are processed with one or more grasp generation operators, e.g. the pose generator, to translate the two-dimensional image locations into three-dimensional locations in the task space of the robot. In some examples, the one or more grasp generation operators also determine orientations of the manipulator, e.g. end effector, based on surface normals in the task space. Thus, one or more three-dimensional locations and orientations (e.g. grasp poses) in the task space are returned, each with a corresponding score, to the robot control system 108. The corresponding scores may be adjusted by the one or more grasp generation operators in examples, e.g. based on a surface normal or other heuristic. The robot control system 108 then issues actuation instructions to the robot based on one or more of the one or more grasp poses and their corresponding scores.

In examples employing data processing, a processor can be employed as part of the relevant system. The processor can be a general-purpose processor such as a central processing unit (CPU), a microprocessor, a graphics processing unit (GPU), a digital signal processor (DSP), an application-specific integrated circuit (ASIC), a field-programmable gate array (FPGA) or another programmable logic device, a discrete gate or transistor logic, discrete hardware components, or any suitable combination thereof designed to perform the data processing functions described herein.

In examples involving a neural network, a specialised processor may be employed as part of the relevant system. The specialised processor may be an NPU, a neural network accelerator (NNA) or other version of a hardware accelerator specialised for neural network functions. Additionally or alternatively, the neural network processing workload may be at least partly shared by one or more standard processors, e.g. CPU or GPU.

The above examples are to be understood as illustrative examples. Further examples are envisaged. For example, another outcome of interest to include in the plurality of outcomes for which the neural network is trained to predict might be scanning speed. For instance, instead of or in addition to making a binary prediction of whether or not an item will be successfully scanned, the neural network may be trained to predict which grasping locations correspond to the shortest amount of time spent trying to get a successful barcode scan. In the context of grocery picking, for example, one of the outcomes in the plurality of outcomes may be a bagging success, wherein the grasping model learns how to pick items such that they can be successfully bagged. The model's prediction of the "bagging success" outcome can be conditioned on the current state of the bags (e.g. as represented by an RGB-D image of an output bin or tote), for example.

In general terms, the described systems and methods can be employed as part of a grasp generation or grasp synthesis pipeline that takes an input image, including depth information, and outputs ranked grasp poses, e.g. having six degrees of freedom. The input to the grasp generation pipeline comprises the input image captured by a camera along with the orientation of the camera in the world coordinate frame, for example. The grasp generation pipeline then includes: passing the input image through the described FCN grasping model and optionally one or more other heuristic map calculations; aggregating resulting heatmaps; sampling pixel locations from the aggregate map; mapping the sampled pixel locations (e.g. in 2D) to corresponding grasp poses (e.g. in 6D); and optionally adjusting a ranking of the corresponding grasping poses based on some combination of heuristics and/or grasping model predictions.

In the described examples, the training data for the grasping model is collected from historic grasp outcomes, e.g. rather than human-annotated outcomes. For example, it is intended for the grasping model to learn "what will happen if I grasp here?" rather than "what does a human think will happen if I grasp here?". However, in some implementations, one or more human pilots are used as part of the production system. Specifically, a human may propose grasp locations for a small proportion of picks if one or more predetermined conditions are met. In such cases, there may be some grasps in the historic dataset for which a grasp location (or grasp strategy) was proposed by a human. Nonetheless, the grasp outcomes are still collected from the physical robot system.

## Claims

1. A data processing apparatus for grasp generation configured to:
obtain image data (310, 401), comprising depth data (312), representative of an image of an object captured by a camera;
process the image data with a grasping model (200) comprising a neural network (400) trained to predict a plurality of independent outcomes associated with a grasping operation based on images of graspable objects;
obtain a plurality of pixelwise predictions (220, 320) corresponding to the plurality of outcomes each pixelwise prediction being a representation of pixelwise probability values corresponding to a given outcome of the plurality of outcomes associated with the grasping operation;
aggregate the plurality of pixelwise predictions, using a weighted aggregation, to obtain an aggregated pixelwise prediction (330);
apply a reinforcement learning model to adjust one or more weights, corresponding to respective pixelwise predictions, of the weighted aggregation; and
output the aggregated pixelwise prediction for selection therefrom of one or more pixels on which to base generation of one or more grasp poses to grasp the object.

2. The data processing apparatus of claim 1, configured to implement the grasping model.

3. The data processing apparatus of claim 1 or 2, wherein the plurality of outcomes associated with the grasping operation comprises two or more of:
a successful grasp of the object;
a successful scan of the object;
a successful placement of the object;
a successful subsequent grasp of another object;
an avoidance of grasping another object with the object; and
an avoidance of stopping the grasping operation.

4. A grasp control system for a robot, comprising the data processing apparatus of any preceding claim, wherein the grasp control system is configured to:
obtain the aggregated pixelwise prediction and one or more pixelwise heuristic maps, each representative of pixelwise heuristic values corresponding to a given heuristic; and
combine the aggregated pixelwise prediction and the one or more pixelwise heuristic maps to obtain a combined pixelwise map.

5. The grasp control system of claim 4, comprising a pose generator configured to:
obtain one or more grasp locations corresponding to one or more pixels sampled from the combined pixelwise map; and
determine one or more grasp poses based on the one or more grasp locations.

6. A grasp control system for a robot, comprising the data processing apparatus of any one of claims 1 to 3, and a pose generator configured to:
obtain one or more grasp locations corresponding to one or more pixels selected from the aggregated pixelwise prediction based on one or more corresponding probability values in the pixelwise prediction; and
determine one or more grasp poses based on the one or more grasp locations.

7. The grasp control system of claim 5 or 6, comprising a controller configured to obtain the one or more grasp poses from the pose generator and control a robotic manipulator to grasp the object based on the one or more grasp poses.

8. A robot comprising the grasp control system of claim 7 and the robotic manipulator.

9. The robot of claim 8, wherein the robotic manipulator comprises an end effector for grasping the object, the end effector comprising at least one of a jaw gripper, a finger gripper, a magnetic or electromagnetic gripper, a Bernoulli gripper, a vacuum suction cup, an electrostatic gripper, a van der Waals gripper, a capillary gripper; a cryogenic gripper; an ultrasonic gripper; or a laser gripper.

10. A computer-implemented method comprising:
obtaining image data (501), comprising depth data, representative of an image of an object captured by a camera;
processing the image data with a grasping model comprising a neural network trained to predict a plurality of independent outcomes associated with a grasping operation based on images of graspable objects (502);
obtaining a plurality of pixelwise predictions corresponding to the plurality of outcomes, each pixelwise prediction being a representation of pixelwise probability values corresponding to a given outcome of the plurality of outcomes associated with the grasping operation (503);
aggregating the plurality of pixelwise predictions (504), using a weighted aggregation, to obtain an aggregated pixelwise prediction;
applying a reinforcement learning model to adjust one or more weights, corresponding to respective pixelwise predictions, of the weighted aggregation; and
outputting the aggregated pixelwise prediction for selection therefrom of one or more pixels on which to base generation of one or more grasp poses to grasp the object (505).

11. The computer-implemented method of claim 10, wherein the plurality of outcomes associated with the grasping operation comprises two or more of:
a successful grasp of the object;
a successful scan of the object;
a successful placement of the object;
a successful subsequent grasp of another object;
an avoidance of grasping another object with the object; and
an avoidance of stopping the grasping operation.

12. The computer-implemented method of claim 10 or 11, wherein the neural network is trained on at least one of historical grasp data or simulated grasp data.

13. The computer-implemented method of one of claims 10 to 12, comprising updating the grasping model based on further grasp data obtained from grasping other objects.

14. The computer-implemented method of claim 13, comprising retraining the neural network based on the further grasp data.

15. The computer-implemented method of any one of claims 10 to 14, comprising:
selecting the one or more pixels from the aggregated pixelwise prediction based on one or more corresponding probability values in the pixelwise prediction; and
outputting one or more grasp locations, for a robot to grasp the object, based on the selected one or more pixels.

16. The computer-implemented method of claim 15, comprising:
determining one or more grasp poses based on the one or more one or more grasp locations; and
outputting the one or more grasp poses to the robot for implementing the one or more grasp poses to grasp the object.

17. The computer-implemented method of any one of claims 10 to 14, comprising:
obtaining the aggregated pixelwise prediction and one or more pixelwise heuristic maps, each representative of pixelwise heuristic values corresponding to a given heuristic; and
combining the aggregated pixelwise prediction and the one or more pixelwise heuristic maps to obtain a combined pixelwise map.

18. The computer-implemented method of claim 17, comprising:
obtaining one or more grasp locations by sampling one or more corresponding pixels from the combined pixelwise map; and
determining one or more grasp poses based on the one or more grasp locations.

19. The computer-implemented method of any one of claims 10 to 18, wherein the neural network comprises a fully convolutional neural network.

20. A computer system comprising one or more processors and computer-readable memory storing executable instructions that, as a result of being executed by the one or more processors, cause the computer system to perform the method of any one of claims 10 to 19.

21. A machine-readable medium having stored thereon a set of instructions, which if performed by one or more processors, cause the one or more processors to perform the method of any one of claims 10 to 19.

## Patentansprüche

1. Datenverarbeitungsvorrichtung zur Greif-Erzeugung, die konfiguriert ist zum:
Erhalten von Bilddaten (310, 401), die Tiefendaten (312) umfassen, die für ein Bild eines Objekts repräsentativ sind, das von einer Kamera aufgenommen wird;
Verarbeiten der Bilddaten mit einem Greifmodell (200), das ein neuronales Netzwerk (400) umfasst, das trainiert ist, um eine Vielzahl von unabhängigen Ergebnissen, die mit einem Greifvorgang verknüpft sind, basierend auf Bildern von greifbaren Objekten vorherzusagen;
Erhalten einer Vielzahl von pixelweisen Vorhersagen (220, 320), die der Vielzahl von Ergebnissen entsprechen, wobei jede pixelweise Vorhersage eine Darstellung von pixelweisen Wahrscheinlichkeitswerten ist, die einem gegebenen Ergebnis der Vielzahl von Ergebnissen entsprechen, die mit dem Greifvorgang verknüpft sind;
Aggregieren der Vielzahl von pixelweisen Vorhersagen unter Verwendung einer gewichteten Aggregation, um eine aggregierte pixelweise Vorhersage (330) zu erhalten;
Anwenden eines Verstärkungslernmodells, um eine oder mehrere Gewichtungen, die jeweiligen pixelweisen Vorhersagen entsprechen, der gewichteten Aggregation anzupassen; und
Ausgeben der aggregierten pixelweisen Vorhersage zur Auswahl daraus eines oder mehrerer Pixel, auf denen die Erzeugung einer oder mehrerer Greifposen zum Greifen des Objekts basieren soll.

2. Datenverarbeitungsvorrichtung nach Anspruch 1, die konfiguriert ist, um das Greifmodell zu implementieren.

3. Datenverarbeitungsvorrichtung nach einem der Ansprüche 1 oder 2, wobei die Vielzahl von Ergebnissen, die mit dem Greifvorgang verknüpft sind, zwei oder mehr umfasst von:
einem erfolgreichen Greifen des Objekts;
einem erfolgreichen Scannen des Objekts;
einer erfolgreichen Platzierung des Objekts;
einem erfolgreichen nachfolgenden Greifen eines anderen Objekts;
einer Vermeidung des Greifens eines anderen Objekts mit dem Objekt; und
einer Vermeidung des Stoppens des Greifvorgangs.

4. Greifsteuersystem für einen Roboter, umfassend die Datenverarbeitungsvorrichtung nach einem der vorhergehenden Ansprüche, wobei das Greifsteuersystem konfiguriert ist zum:
Erhalten der aggregierten pixelweisen Vorhersage und eines oder mehrerer pixelweiser Heuristikkennfelder, die jeweils für pixelweise Heuristikwerte repräsentativ sind, die einer gegebenen Heuristik entsprechen; und
Kombinieren der aggregierten pixelweisen Vorhersage und des einen oder der mehreren pixelweisen Heuristikkennfelder, um ein kombiniertes pixelweises Kennfeld zu erhalten.

5. Greifsteuersystem nach Anspruch 4, umfassend einen Posengenerator, der konfiguriert ist zum:
Erhalten einer oder mehrerer Greifstellen, die einem oder mehreren Pixeln entsprechen, die aus dem kombinierten pixelweisen Kennfeld abgetastet werden; und
Bestimmen einer oder mehrerer Greifposen basierend auf der einen oder den mehreren Greifstellen.

6. Greifsteuersystem für einen Roboter, umfassend die Datenverarbeitungsvorrichtung nach einem der Ansprüche 1 bis 3 und einen Posengenerator, der konfiguriert ist zum:
Erhalten einer oder mehrerer Greifstellen, die einem oder mehreren Pixeln entsprechen, die aus der aggregierten pixelweisen Vorhersage basierend auf einem oder mehreren entsprechenden Wahrscheinlichkeitswerten in der pixelweisen Vorhersage ausgewählt werden; und
Bestimmen einer oder mehrerer Greifposen basierend auf der einen oder den mehreren Greifstellen.

7. Greifsteuersystem nach einem der Ansprüche 5 oder 6, umfassend eine Steuerung, die konfiguriert ist, um die eine oder die mehreren Greifposen von dem Posengenerator zu erhalten und einen Robotermanipulator zu steuern, um das Objekt basierend auf der einen oder den mehreren Greifposen zu greifen.

8. Roboter, umfassend das Greifsteuersystem nach Anspruch 7 und den Robotermanipulator.

9. Roboter nach Anspruch 8, wobei der Robotermanipulator einen Endeffektor zum Greifen des Objekts umfasst, wobei der Endeffektor mindestens eines von einem Backengreifer, einem Fingergreifer,
einem magnetischen oder elektromagnetischen Greifer, einem Bernoulli-Greifer, einem Vakuumsaugnapf, einem elektrostatischen Greifer, einem Van-der-Waals-Greifer, einem Kapillargreifer; einem kryogenen Greifer;
einem Ultraschallgreifer; oder einem Lasergreifer umfasst.

10. Computerimplementiertes Verfahren, umfassend:
Erhalten von Bilddaten (501), die Tiefendaten umfassen, die für ein Bild eines Objekts repräsentativ sind, das von einer Kamera aufgenommen wird;
Verarbeiten der Bilddaten mit einem Greifmodell, das ein neuronales Netzwerk umfasst, das trainiert ist, um eine Vielzahl von unabhängigen Ergebnissen, die mit einem Greifvorgang verknüpft sind, basierend auf Bildern von greifbaren Objekten (502) vorherzusagen;
Erhalten einer Vielzahl von pixelweisen Vorhersagen, die der Vielzahl von Ergebnissen entsprechen, wobei jede pixelweise Vorhersage eine Darstellung von pixelweisen Wahrscheinlichkeitswerten ist, die einem gegebenen Ergebnis der Vielzahl von Ergebnissen entsprechen, die mit dem Greifvorgang (503) verknüpft sind;
Aggregieren der Vielzahl von pixelweisen Vorhersagen (504) unter Verwendung einer gewichteten Aggregation, um eine aggregierte pixelweise Vorhersage zu erhalten;
Anwenden eines Verstärkungslernmodells, um eine oder mehrere Gewichtungen, die jeweiligen pixelweisen Vorhersagen entsprechen, der gewichteten Aggregation anzupassen; und
Ausgeben der aggregierten pixelweisen Vorhersage zur Auswahl daraus eines oder mehrerer Pixel, auf denen die Erzeugung einer oder mehrerer Greifposen zum Greifen des Objekts (505) basieren soll.

11. Computerimplementiertes Verfahren nach Anspruch 10, wobei die Vielzahl von Ergebnissen, die mit dem Greifvorgang verknüpft sind, zwei oder mehr umfasst von:
einem erfolgreichen Greifen des Objekts;
einem erfolgreichen Scannen des Objekts;
einer erfolgreichen Platzierung des Objekts;
einem erfolgreichen nachfolgenden Greifen eines anderen Objekts;
einer Vermeidung des Greifens eines anderen Objekts mit dem Objekt; und
einer Vermeidung des Stoppens des Greifvorgangs.

12. Computerimplementiertes Verfahren nach einem der Ansprüche 10 oder 11, wobei das neuronale Netzwerk auf mindestens einem von historischen Greifdaten oder simulierten Greifdaten trainiert ist.

13. Computerimplementiertes Verfahren nach einem der Ansprüche 10 bis 12, umfassend das Aktualisieren des Greifmodells basierend auf weiteren Greifdaten, die aus dem Greifen anderer Objekte erhalten werden.

14. Computerimplementiertes Verfahren nach Anspruch 13, umfassend das Neutrainieren des neuronalen Netzwerks basierend auf den weiteren Greifdaten.

15. Computerimplementiertes Verfahren nach einem der Ansprüche 10 bis 14, umfassend:
Auswählen des einen oder der mehreren Pixel aus der aggregierten pixelweisen Vorhersage basierend auf einem oder mehreren entsprechenden Wahrscheinlichkeitswerten in der pixelweisen Vorhersage; und
Ausgeben einer oder mehrerer Greifstellen für einen Roboter zum Greifen des Objekts basierend auf dem ausgewählten einen oder den ausgewählten mehreren Pixeln.

16. Computerimplementiertes Verfahren nach Anspruch 15, umfassend:
Bestimmen einer oder mehrerer Greifposen basierend auf der einen oder den mehreren Greifstellen; und
Ausgeben der einen oder der mehreren Greifposen an den Roboter zum Implementieren der einen oder der mehreren Greifposen zum Greifen des Objekts.

17. Computerimplementiertes Verfahren nach einem der Ansprüche 10 bis 14, umfassend:
Erhalten der aggregierten pixelweisen Vorhersage und eines oder mehrerer pixelweiser Heuristikkennfelder, die jeweils für pixelweise Heuristikwerte repräsentativ sind, die einer gegebenen Heuristik entsprechen;
und
Kombinieren der aggregierten pixelweisen Vorhersage und des einen oder mehreren pixelweisen Heuristikkennfelder, um ein kombiniertes pixelweises Kennfeld zu erhalten.

18. Computerimplementiertes Verfahren nach Anspruch 17, umfassend:
Erhalten einer oder mehrerer Greifstellen durch Abtasten eines oder mehrerer entsprechender Pixel aus dem kombinierten pixelweisen Kennfeld; und
Bestimmen einer oder mehrerer Greifposen basierend auf der einen oder den mehreren Greifstellen.

19. Computerimplementiertes Verfahren nach einem der Ansprüche 10 bis 18, wobei das neuronale Netzwerk ein vollständig gefaltetes neuronales Netzwerk umfasst.

20. Computersystem, umfassend einen oder mehrere Prozessoren und einen computerlesbaren Speicher, der ausführbare Anweisungen speichert, die als Ergebnis der Ausführung durch den einen oder die mehreren Prozessoren das Computersystem veranlassen, das Verfahren nach einem der Ansprüche 10 bis 19 durchzuführen.

21. Maschinenlesbares Medium, auf dem ein Satz von Anweisungen gespeichert ist, die, wenn sie von einem oder mehreren Prozessoren ausgeführt werden, den einen oder die mehreren Prozessoren veranlassen, das Verfahren nach einem der Ansprüche 10 bis 19 durchzuführen.

## Revendications

1. Appareil de traitement de données pour générer une saisie, configuré pour :
obtenir des données d'image (310, 401), comprenant des données de profondeur (312), représentatives d'une image d'un objet capturée par une caméra ;
fournir les données d'image à un modèle de saisie (200) comprenant un réseau neuronal (400) formé pour prédire une pluralité de résultats indépendants associés à une opération de saisie sur la base d'images d'objets pouvant être saisis ;
obtenir une pluralité de prédictions pixel par pixel (220, 320) correspondant à la pluralité de résultats.
chaque prédiction pixel par pixel étant une représentation de valeurs de probabilité pixel par pixel correspondant à un résultat donné de la pluralité de résultats associés à l'opération de saisie ;
agréger la pluralité de prédictions pixel par pixel, en utilisant une agrégation pondérée, pour obtenir une prédiction pixel par pixel agrégée (330) ;
appliquer un modèle d'apprentissage par renforcement pour ajuster un ou plusieurs poids, correspondant à des prédictions pixel par pixel respectives, de l'agrégation pondérée ; et
délivrer en sortie la prédiction pixel par pixel agrégée pour une sélection à partir de celle-ci d'un ou plusieurs pixels servant de base pour la génération d'une ou plusieurs poses de saisie pour saisir l'objet.

2. Appareil de traitement de données selon la revendication 1, configuré pour mettre en œuvre le modèle de saisie.

3. Appareil de traitement de données selon la revendication 1 ou 2, dans lequel la pluralité de résultats associés à l'opération de saisie comprend deux ou plus parmi :
une saisie réussie de l'objet ;
un balayage réussi de l'objet ;
une mise en place réussie de l'objet ;
une saisie ultérieure réussie d'un autre objet ;
une saisie évitée d'un autre objet avec l'objet ; et
un arrêt évité de l'opération de saisie.

4. Système de commande de saisie pour un robot, comprenant l'appareil de traitement de données selon l'une quelconque des revendications précédentes, dans lequel le système de commande de saisie est configuré pour :
obtenir la prédiction pixel par pixel agrégée et une ou plusieurs cartes heuristiques pixel par pixel, chacune représentative de valeurs heuristiques pixel par pixel correspondant à une heuristique donnée ; et
combiner la prédiction pixel par pixel agrégée et les une ou plusieurs cartes heuristiques au niveau pixel par pixel pour obtenir une carte pixel par pixel combinée.

5. Système de commande de saisie selon la revendication 4, comprenant un générateur de pose configuré pour :
obtenir un ou plusieurs emplacements de saisie correspondant à un ou plusieurs pixels échantillonnés à partir de la carte pixel par pixel combinée ; et
déterminer une ou plusieurs poses de saisie sur la base des un ou plusieurs emplacements de saisie.

6. Système de commande de saisie pour un robot, comprenant l'appareil de traitement de données selon l'une quelconque des revendications 1 à 3, et un générateur de pose configuré pour :
obtenir un ou plusieurs emplacements de saisie correspondant à un ou plusieurs pixels sélectionnés à partir de la prédiction pixel par pixel agrégée sur la base d'une ou plusieurs valeurs de probabilité correspondantes dans la prédiction pixel par pixel ; et
déterminer une ou plusieurs poses de saisie sur la base des un ou plusieurs emplacements de saisie.

7. Système de commande de saisie selon la revendication 5 ou 6, comprenant un dispositif de commande configuré pour obtenir les une ou plusieurs poses de saisie à partir du générateur de pose et commander un manipulateur robotique pour saisir l'objet sur la base des une ou plusieurs poses de saisie.

8. Robot comprenant le système de commande de saisie selon la revendication 7 et le manipulateur robotique.

9. Robot selon la revendication 8, dans lequel le manipulateur robotique comprend un effecteur d'extrémité pour saisir l'objet, l'effecteur d'extrémité comprenant au moins un parmi un dispositif de saisie à mâchoire, un dispositif de saisie à doigt, un dispositif de saisie magnétique ou électromagnétique, un dispositif de saisie de Bernoulli, une ventouse d'aspiration, un dispositif de saisie électrostatique, un dispositif de saisie de van der Waals, un dispositif de saisie capillaire ; un dispositif de saisie cryogénique ; un dispositif de saisie à ultrasons ; ou un dispositif de saisie à laser.

10. Procédé mis en œuvre par ordinateur, comprenant les étapes consistant à :
obtenir des données d'image (501), comprenant des données de profondeur, représentatives d'une image d'un objet capturée par une caméra ;
traiter les données d'image avec un modèle de saisie comprenant un réseau neuronal formé pour prédire une pluralité de résultats indépendants associés à une opération de saisie sur la base d'images d'objets pouvant être saisis (502) ;
obtenir une pluralité de prédictions pixel par pixel correspondant à la pluralité de résultats, chaque prédiction pixel par pixel étant une représentation de valeurs de probabilité pixel par pixel correspondant à un résultat donné de la pluralité de résultats associés à l'opération de saisie (503) ;
agréger la pluralité de prédictions pixel par pixel (504), en utilisant une agrégation pondérée, pour obtenir une prédiction pixel par pixel agrégée ;
appliquer un modèle d'apprentissage par renforcement pour ajuster un ou plusieurs poids, correspondant à des prédictions pixel par pixel respectives, de l'agrégation pondérée ; et
délivrer en sortie la prédiction pixel par pixel agrégée pour une sélection à partir de celle-ci d'un ou plusieurs pixels servant de base pour la génération d'une ou plusieurs poses de saisie pour saisir l'objet (505).

11. Procédé mis en œuvre par ordinateur selon la revendication 10, dans lequel la pluralité de résultats associés à l'opération de saisie comprend deux ou plus parmi :
une saisie réussie de l'objet ;
un balayage réussi de l'objet ;
une mise en place réussie de l'objet ;
une saisie ultérieure réussie d'un autre objet ; une saisie évitée d'un autre objet avec l'objet ; et un arrêt évité de l'opération de saisie.

12. Procédé mis en œuvre par ordinateur selon la revendication 10 ou 11, dans lequel le réseau neuronal est formé sur au moins certaines de données de saisie historiques ou de données de saisie simulées.

13. Procédé mis en œuvre par ordinateur selon l'une quelconque des revendications 10 à 12, comprenant une mise à jour du modèle de saisie sur la base de données de saisie supplémentaires obtenues à partir d'une saisie d'autres objets.

14. Procédé mis en œuvre par ordinateur selon la revendication 13, comprenant une nouvelle formation du réseau neuronal sur la base des données de saisie supplémentaires.

15. Procédé mis en œuvre par ordinateur selon l'une quelconque des revendications 10 à 14, comprenant les étapes consistant à :
sélectionner les un ou plusieurs pixels à partir de la prédiction pixel par pixel agrégée sur la base d'une ou plusieurs valeurs de probabilité correspondantes dans la prédiction pixel par pixel ; et
délivrer en sortie un ou plusieurs emplacements de saisie, pour qu'un robot saisisse l'objet, sur la base des un ou plusieurs pixels sélectionnés.

16. Procédé mis en œuvre par ordinateur selon la revendication 15, comprenant les étapes consistant à :
déterminer une ou plusieurs poses de saisie sur la base des un ou plusieurs emplacements de saisie ; et
délivrer en sortie les une ou plusieurs poses de saisie vers le robot pour mettre en œuvre les une ou plusieurs poses de saisie pour saisir l'objet.

17. Procédé mis en œuvre par ordinateur selon l'une quelconque des revendications 10 à 14, comprenant les étapes consistant à :
obtenir la prédiction pixel par pixel agrégée et une ou plusieurs cartes heuristiques pixel par pixel, chacune représentative de valeurs heuristiques pixel par pixel correspondant à une heuristique donnée ; et
combiner la prédiction pixel par pixel agrégée et les une ou plusieurs cartes heuristiques pixel par pixel pour obtenir une carte pixel par pixel combinée.

18. Procédé mis en œuvre par ordinateur selon la revendication 17, comprenant les étapes consistant à :
obtenir un ou plusieurs emplacements de saisie en échantillonnant un ou plusieurs pixels correspondants à partir de la carte pixel par pixel combinée ; et
déterminer une ou plusieurs poses de saisie sur la base des un ou plusieurs emplacements de saisie.

19. Procédé mis en œuvre par ordinateur selon l'une quelconque des revendications 10 à 18, dans lequel le réseau neuronal comprend un réseau neuronal entièrement convolutif.

20. Système informatique comprenant un ou plusieurs processeurs et une mémoire lisible par ordinateur stockant des instructions exécutables qui, à la suite de leur exécution par les un ou plusieurs processeurs, amènent le système informatique à exécuter le procédé selon l'une quelconque des revendications 10 à 19.

21. Support lisible par machine présentant stocké sur celui-ci un ensemble d'instructions qui, si elles sont exécutées par un ou plusieurs processeurs, amènent les un ou plusieurs processeurs à exécuter le procédé selon l'une quelconque des revendications 10 à 19.
